# EUROPEAN PATENT SPECIFICATION

(11) **EP 4 621 976 B1**
(45) Date of publication and mention of the grant of the patent: **11.11.2026**
(21) Application number: 24214829.4
(22) Date of filing: 22.11.2024
(51) Int. Cl.: H01M 50/516, H01M 50/533, H01M 50/566, H01M 50/505, H01M 50/553, H01M 50/584

(54) **BATTERY PACK**
BATTERIEPACK
BLOC-BATTERIE

(30) Priority: 21.03.2024 CN 202410329098
(43) Date of publication of application: 24.09.2025
(73) Proprietor: CALB Group Co., Ltd., Changzhou City, Jiangsu Province (CN)
(72) Inventor: WANG, Ke, Changzhou City, Jiangsu Province (CN); XU, Jiuling, Changzhou City, Jiangsu Province (CN); LI, Huizhen, Changzhou City, Jiangsu Province (CN)
(74) Representative: Becker, Eberhard

(56) References cited:
- EP-A1- 4 293 769
- CN-U- 212 783 705
- CN-U- 219 677 509

## Description

### Technical Field

The present disclosure relates to the technical field of batteries, and in particular to a battery pack.

### Background Art

In the related art, the battery pack may include a plurality of single batteries and a busbar, the busbar may be used to realize electrical connection of at least two single batteries, and the busbar may be welded and electrically connected to the pole structure. The battery housing and the pole structure can be insulated and protected by an insulating member, and the insulating member may be damaged during the welding process between the busbar and the pole structure. CN 212 783 705 U discloses the characterizing portion of claim 1.

### Summary of the Invention

The present disclosure provides a battery pack to improve the serviceability of the battery pack.

The disclosure provides a battery pack including a single battery and a busbar, the single battery including:
a pole structure, wherein the pole structure is welded with the busbar, a welding imprint is formed on a surface, away from the pole structure, of the busbar, an area of the welding imprint is S, and a maximum molten pool depth formed on the pole structure by welding with the busbar is H;
a battery housing, wherein a pole through hole is provided on the battery housing, at least a part of the pole structure is provided in the pole through hole, the battery housing is provided with a fixing portion bent into a connection section and a pressing section, the connection section is provided on the battery housing, and the pressing section is pressed on the pole structure such that the pole structure is sandwiched between the pressing section and the battery housing; and
an insulating member, wherein at least a part of the insulating member is provided between the fixing portion and the pole structure, and a minimum vertical distance between the insulating member and the welding imprint in a direction perpendicular to a direction where the pole through hole penetrates is L, and 3 mm²≤S×H/L≤1000 mm².

The battery pack according to the embodiment of the present disclosure includes a single battery and a busbar, and the single battery and the busbar are electrically connected to each other. The single battery includes a pole structure, a battery housing, a fixing portion and an insulating member, wherein the pole structure on the battery housing is welded and connected to the busbar, the fixing portion on the battery housing and the battery housing realize the fixing of the pole structure to ensure the stability of the pole structure, and at least a part of the insulating member is provided between the fixing portion and the pole structure to ensure the insulaton performance between the fixing portion and the pole structure. The area of the welding imprint on the busbar is set to S, the maximum molten pool depth formed on the pole structure by welding with the busbar is set to H, and the minimum vertical distance between the insulating member and the welding imprint is set to L, wherein 3 mm²≤S×H/L≤1000 mm², which can ensure a connection strength of the pole structure and the busbar, and can also avoid a large amount of heat being transferred to the insulating member during the welding process between the pole structure and the busbar, which would cause the melting of the insulating member and affect a pressing strength of the connection section and the pressing section to the pole structure, thereby ensuring a fixing stability of the pole structure and improving a safe use performance of the battery.

### Brief Description of the Drawings

For a better understanding of the present disclosure, reference may be made to the embodiments illustrated in the following drawings. The components in the drawings are not necessarily to scale, and related elements may be omitted to emphasize and clearly illustrate the technical features of the present disclosure. In addition, the associated elements or components may have different arrangements as known in the art. Further, in the drawings, like reference numerals designate identical or similar parts throughout the several views. In the drawings:
FIG. 1 is a schematic structural diagram of a single battery according to an exemplary implementation;
FIG. 2 is a partial cross-sectional schematic structural diagram of a battery pack according to an exemplary implementation; and
FIG. 3 is a schematic structural diagram of a battery pack according to an exemplary implementation.

### Reference numerals:

10, single battery; 11, pole structure; 12, battery housing; 121, pole through hole; 122, cover plate; 123, housing member; 13, fixing portion; 131, connection section; 132, pressing section; 20, busbar; 14, insulating member; 15, cell; 21, welding imprint.

### Detailed Description of the Invention

The technical solutions in the exemplary embodiments of the present disclosure will be described clearly and completely in combination with the drawings in the exemplary embodiments of the present disclosure. The exemplary embodiments described herein are for illustrative purposes only and are not intended to limit the scope of the present disclosure, so it is to be understood that various modifications and changes may be made to the exemplary embodiments without departing from the scope of protection of the present disclosure.

In the description of the present disclosure, the terms "first" and "second" are used for descriptive purposes only and are not to be construed as indicating or implying relative importance unless explicitly stated or limited otherwise; the term "plurality" means two or more than two; the term "and/or" includes any and all combinations of one or more of the associated listed items. In particular, reference to "the" object or "an" object is also intended to mean one of a possible plurality of such objects.

Unless otherwise specified or indicated, the terms "connection", "fixation", and the like are to be construed broadly. For example, "connection" may be fixed, or may be detachable, or may be integral, or may be electrical, or may be connected via a signal; and the "connection" may be a direct connection or an indirect connection through an intermediary. The specific meaning of the above-mentioned terms in the present disclosure can be understood by a person skilled in the art according to specific circumstances.

Further, in the description of the present disclosure, it is to be understood that the directional terms "upper", "lower", "inner", "outer", and the like, as described in terms of angles shown in the drawings and should not be construed as limiting the exemplary embodiments of the present disclosure. It will also be understood that when an element or feature is referred to as being "on", "under", or "inside" or "outside" other element(s), it can not only be directly connected "on", "under", "inside" or "outside" the other element(s), but also indirectly connected "on", "under", "inside" or "outside" the other element(s) through intervening elements.

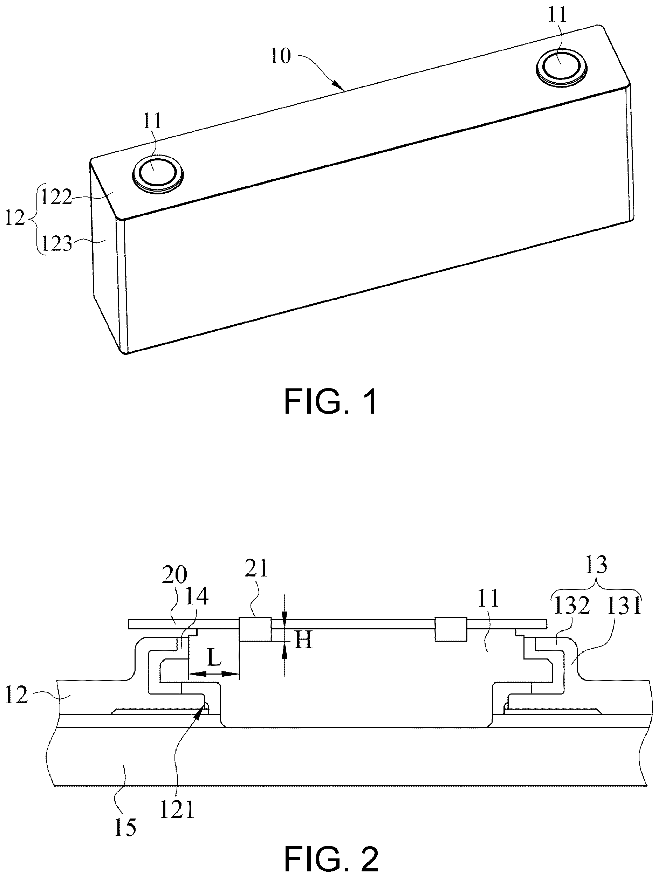

An embodiment of the present disclosure provides a battery pack, please refer to FIGs. 1 to 3, the battery pack includes a single battery 10 and a busbar 20, the single battery 10 includes: a pole structure 11, wherein the pole structure 11 is welded with the busbar 20 to form a welding imprint 21 on a surface, away from the pole structure 11, of the busbar 20, an area of the welding imprint 21 is S, and a maximum molten pool depth formed on the pole structure 11 by welding with the busbar 20 is H; a battery housing 12, wherein the battery housing 12 is provided with a pole through hole 121, at least a part of the pole structure 11 is provided in the pole through hole 121, the battery housing 12 is provided with a fixing portion 13, the fixing portion 13 is provided around the pole through hole 121, the fixing portion 13 is bent into a connection section 131 and a pressing section 132, the connection section 131 is provided on the battery housing 12, and the pressing section 132 is pressed on the pole structure 11 such that the pole structure 11 is sandwiched between the pressing section 132 and the battery housing 12; an insulating member 14, wherein at least a part of the insulating member 14 is provided between the fixing portion 13 and the pole structure 11, a minimum vertical distance between the insulating member 14 and the welding print 21 in a direction perpendicular to a direction where the pole through hole 121 penetrates is L, and 3 mm²≤S×H/L≤1000 mm².

The battery pack according to an embodiment of the present disclosure includes a single battery 10 and a busbar 20, and the single battery 10 and the busbar 20 are electrically connected to each other. The single battery 10 includes a pole structure 11, a battery housing 12, a fixing portion 13, and an insulating member 14, wherein the pole structure 11 on the battery housing 12 is welded and connected to the busbar 20, the fixing portion 13 on the battery housing 12 and the battery housing 12 realize fixing of the pole structure 11 to ensure the stability of the pole structure 11, and at least a part of the insulating member 14 is provided between the fixing portion 13 and the pole structure 11 to ensure an insulation performance between the fixing portion 13 and the pole structure 11. The area of the welding imprint 21 on the busbar 20 is set to S, the maximum molten pool depth formed on the pole structure 11 by welding with the busbar 20 is set to H, and the minimum vertical distance between the insulating member 14 and the welding imprint 21 is set to L, wherein 3 mm²≤S×H/L≤1000 mm², which can ensure a connection strength of the pole structure 11 and the busbar 20, and can also avoid a large amount of heat being transferred to the insulating member 14 during the welding process between the pole structure 11 and the busbar 20, which would cause the melting of the insulating member 14 and affect a pressing strength of the connection section 131 and the pressing section 132 to the pole structure 11, thereby ensuring a fixing stability of the pole structure 11 and improving a safe use performance of the battery.

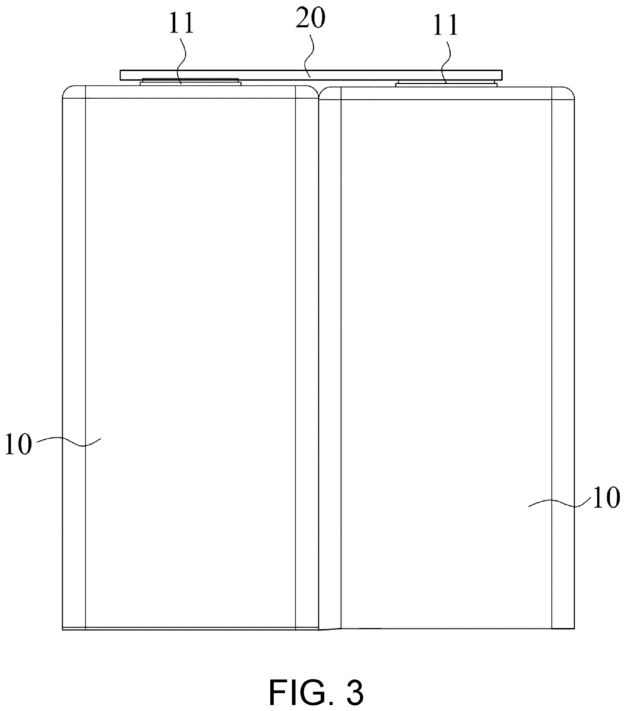

Note that, as shown in FIG. 3, the battery pack may include a plurality of single batteries 10 and a busbar 20, and the busbar 20 realizes electrical connection to at least two single batteries 10. For example, the busbar 20 realizes series connection to at least two single batteries 10, or the busbar 20 realizes parallel connection to at least two single batteries 10.

The pole structure 11 and the busbar 20 are welded with each other, thereby ensuring the connection stability between the pole structure 11 and the busbar 20, and effectively controlling the discharge capacity between the pole structure 11 and the busbar 20. After the pole structure 11 and the busbar 20 are welded and connected to each other, a welding imprint 21 is formed on a surface, away from the pole structure 11, of the busbar 20, and the area S of the welding imprint 21 can be basically regarded as a welding area between the pole structure 11 and the busbar 20. The molten pool depth formed by welding the pole structure 11 and the busbar 20 is H, which can be regarded as a maximum molten pool depth formed by welding the pole structure 11 and the busbar 20, thereby ensuring the connection stability and discharge capacity between the pole structure 11 and the busbar 20. The pole structure 11 and the busbar 20 may be laser welded, or the pole structure 11 and the busbar 20 may be resistance welded, or the pole structure 11 and the busbar 20 may be ultrasonic welded, or the like. The surface, away from the pole structure 11, of the busbar 20 is formed with a welding imprint 21, and a shape of the welding imprint 21 may be a circular ring shape, or a shape of the welding imprint 21 may be a circular shape, or a shape of the welding imprint 21 may be a polygon shape, etc., which is not limited here.

The battery housing 12 is provided with a pole through hole 121, and at least a part of the pole structure 11 is provided in the pole through hole 121, thereby facilitating the formation of an electrical connection between the pole structure 11 and the cell. A portion of the pole structure 11 may be located within the pole through hole 121, or all of the pole structure 11 may be located within the pole through hole 121.

As shown in FIG. 2, the battery housing 12 is provided with a fixing portion 13, the fixing portion 13 is provided around the pole through hole 121, the fixing portion 13 is bent into a connection section 131 and a pressing section 132, the connection section 131 is provided on the battery housing 12, and the pressing section 132 is pressed on the pole structure 11, such that the pole structure 11 is sandwitched between the pressing section 132 and the battery housing 12, thereby effectively preventing the pole structure 11 from being separated from the battery housing 12 and ensuring the safe use performance of the single battery 10.

As shown in FIG. 2, at least a part of the insulating member 14 is provided between the fixing portion 13 and the pole structure 11, and the insulating member 14 can not only form an insulation protection between the fixing portion 13 and the pole structure 11, but also further ensure the pressing effect of the fixing portion 13 on the pole structure 11, thereby ensuring the fixing performance of the pole structure 11.

As shown in FIG. 2, a minimum vertical distance between the insulating member 14 and the welding imprint 21 in a direction perpendicular to a direction where the pole through hole 121 penetrates is L, that is, an amount of heat transfer to the insulating member 14 can be controlled by the minimum vertical distance L between the insulating member 14 and the welding imprint 21, thereby reducing damage to the insulating member 14 during the welding process between the pole structure 11 and the busbar 20. The direction where the pole through hole 121 penetrates may be considered to be an extension direction of the pole through hole 121. For example, the pole through hole 121 is a cylindrical hole, and the direction where the pole through hole 121 penetrates may be considered to be an extension direction of a center line of the cylindrical hole.

If a ratio of a product of the area S of the welding imprint 21 on the busbar 20 and the molten pool depth H to the minimum vertical distance L between the insulating member 14 and the welding imprint 21 is too large, the product of the area S of the welding imprint 21 on the busbar 20 and the molten pool depth H is large, the minimum vertical distance L between the insulating member 14 and the welding imprint 21 is small, and the heat during the welding process is easily transferred to the insulating member 14, causing melting of the insulating member 14, affecting the pressing strength of the fixing portion 13, and causing the risk of failure of the fixing portion 13. If the ratio of the product of the area S of the welding imprint 21 on the busbar 20 and the molten pool depth H to the minimum vertical distance L between the insulating member 14 and the welding imprint 21 is too small, the connection strength between the busbar 20 and the pole structure 11 is insufficient, and the connection failure is likely to occur. By making the ratio of the product of the area S of the welding imprint 21 on the busbar 20 and the molten pool depth H to the minimum vertical distance L between the insulating member 14 and the welding imprint 21 be in range of 3 mm²-1000 mm², not only the fixng stability of the pole structure 11 can be ensured, but also the connection strength between the busbar 20 and the pole structure 11 can be ensured, and the discharge capacity between the busbar 20 and the pole structure 11 can be ensured, thereby improving the safe use performance of the battery.

The product of the area S of the welding imprint 21 on the busbar 20 and the molten pool depth H can be understood as the amount of heat generated during welding, and an increase in the area S of the welding imprint 21 on the busbar 20 and the molten pool depth H increases the amount of heat of welding, and by controlling a magnitude of the product of the area S of the welding imprint 21 on the busbar 20 and the molten pool depth H, the amount of heat of welding can be controlled, thereby improving the welding quality.

The ratio of the product of the area S of the weld imprint 21 on the busbar 20 and the molten pool depth H to the minimum vertical distance L between the insulating member 14 and the welding imprint 21 may be 3 mm², 4 mm², 5 mm², 8 mm², 10 mm², 14 mm², 15 mm², 18 mm², 20 mm², 24 mm², 25 mm², 28 mm², 30 mm², 34 mm², 35 mm², 38 mm², 40 mm², 44 mm², 45 mm², 48 mm², 50 mm², 54 mm², 55 mm², 58 mm², 60 mm², 65 mm², 68 mm², 70 mm², 74 mm², 75 mm², 78 mm², 80 mm², 84 mm², 85 mm², 88 mm², 90 mm², 94 mm², 95 mm², 98 mm², 100 mm², 110 mm², 120 mm², 130 mm², 140 mm², 150 mm², 160 mm², 170 mm², 180 mm², 190 mm², 200 mm², 210 mm², 220 mm², 230 mm², 240 mm², 250 mm², 260 mm², 270 mm², 280 mm², 290 mm², 300 mm², 310 mm², 320 mm², 330 mm², 340 mm², 350 mm², 360 mm², 370 mm², 380 mm², 390 mm², 400 mm², 500 mm², 600 mm², 700 mm², 800 mm², 900 mm², or 1000 mm², etc.

The insulating member 14 may have an integrated structure. For example, the insulating member 14 may be an injection molded member, thereby forming an insulation and sealing protection between the pole structure 11 and the battery housing 12. Alternatively, the insulating member 14 may include a plurality of separate portions. For example, the insulating member 14 may include a sealing ring, an insulating segment, and the like.

After the busbar 20 and the pole structure 11 are welded, the surface, away from the pole structure 11, of the busbar 20 may be formed with a welding imprint 21, which appears on the surface, away from the pole structure 11, of the busbar 20, and when the area of the welding imprint 21 is measured, it may be measured by a visual inspection mechanism. For example, the welding imprint 21 on the surface, away from the pole structure 11, of the busbar 20 is circular, and a radius or diameter of the circle can be measured and obtained, thereby calculating the area S of the welding imprint 21; alternatively, picture information of the welding imprint 21 may be obtained by using a visual inspection mechanism, and the area S of the welding imprint 21 may be obtained by analyzing and calculating the picture. The measurement method of the area S of the welding imprint 21 formed on the surface, away from the pole structure 11, of the busbar 20 is not limited here, and the measurement can be performed according to actual needs.

The maximum molten pool depth H formed on the pole structure 11 by welding with the busbar 20 can be obtained by cutting the pole structure 11 and the busbar 20 along the extension direction of the molten pool, and the maximum depth value of the molten pool of the welding imprint 21 formed on the pole structure 11 with the busbar 20 can be measured, and, as shown in FIG. 2, the molten pool depth H formed by welding the pole structure 11 and the busbar 20 can be obtained. The molten pool in FIG. 2 is only a schematic structure, and the shape of the molten pool is not particularly limited.

As shown in FIG. 2, regarding the minimum vertical distance L between the insulating member 14 and the welding imprint 21, the minimum vertical distance L between the insulating member 14 and the welding imprint 21 can be measured and obtained by cutting the pole structure 11 and the busbar 20 along the extension direction of the molten pool.

In one embodiment, the melting point of the pole structure 11 is T1, the melting temperature of the insulating member 14 is T2, and 3 mm²≤(S×H×T1)/(L×T2)≤10000 mm², which not only effectively controls the welding energy between the busbar 20 and the pole structure 11 to avoid damage to the insulating member 14, but also ensures the connection strength between the busbar 20 and the pole structure 11.

When (S×H×T1)/(L×T2) is too large, (S×H×T1) is too large and (L×T2) is small, and the welding heat between the busbar 20 and the pole structure 11 is high, which is likely to cause melting failure of the insulating member 14 during the welding process. When (S×H×T1)/(L×T2) is too small, (S×H×T1) is too small, and when (L×T2) is relatively large, the welding strength between the busbar 20 and the pole structure 11 is likely to be insufficient, and the minimum vertical distance L between the insulating member 14 and the welding imprint 21 is left large, which is likely to cause discharge problems and failure of the fusion joint.

(S×H×T1)/(L×T2) may be 3 mm², 4 mm², 5 mm², 8 mm², 10 mm², 14 mm², 15 mm², 18 mm², 20 mm², 24 mm², 25 mm², 28 mm², 30 mm², 34 mm², 35 mm², 38 mm², 40 mm², 44 mm², 45 mm², 48 mm², 50 mm², 54 mm², 55 mm², 58 mm², 60 mm², 65 mm², 68 mm², 70 mm², 74 mm², 75 mm², 78 mm², 80 mm², 84 mm², 85 mm², 88 mm², 90 mm², 94 mm², 95 mm², 98 mm², 100 mm², 110 mm², 120 mm², 130 mm², 140 mm², 150 mm², 160 mm², 170 mm², 180 mm², 190 mm², 200 mm², 210 mm², 220 mm², 230 mm², 240 mm², 250 mm², 260 mm², 270 mm², 280 mm², 290 mm², 300 mm², 310 mm², 320 mm², 330 mm², 340 mm², 350 mm², 360 mm², 370 mm², 380 mm², 390 mm², 400 mm², 500 mm², 600 mm², 700 mm², 800 mm², 900 mm², 1000 mm², 1100 mm², 1200 mm², 1300 mm², 1400 mm², 1500 mm², 1600 mm², 1700 mm², 1800 mm², 1900 mm², 2000 mm², 2100 mm², 2200 mm², 2300 mm², 2400 mm², 2500 mm², 2600 mm², 2700 mm², 2800 mm², 2900 mm², 3000 mm², 3100 mm², 3200 mm², 3300 mm², 3400 mm², 3500 mm², 3600 mm², 3700 mm², 3800 mm², 3900 mm², 4000 mm², 4500 mm², 5000 mm², 5500 mm², 6000 mm², 6500 mm², 7000 mm², 7500 mm², 8000 mm², 8500 mm², 9000 mm², 9500 mm², 9600 mm², or 10000 mm², etc.

In one embodiment, the melting point of the pole structure 11 is T1, 600°C ≤ T1 ≤ 1200°C, such that the energy during welding between the busbar 20 and the pole structure 11 can be effectively controlled, and excessive welding energy can be avoided to affect the insulating member 14, thereby improving the safe use performance of the single battery 10.

The melting point T1 of the pole structure 11 may be 600°C, 605°C, 610°C, 615°C, 620°C, 630°C, 640°C, 650°C, 660°C, 670°C, 680°C, 690°C, 700°C, 750°C, 800°C, 850°C, 900°C, 950°C, 1000°C, 1050°C, 1100°C, 1150°C, or 1200°C, etc.

The pole structure 11 may be made of copper, or the pole structure 11 may be made of aluminum, or the pole structure 11 may be made of tin, or the pole structure 11 may be made of steel, or the pole structure 11 may be made of iron, or the pole structure 11 may be made of a metal composite material. For example, the pole structure 11 may be a copper-aluminum composite structure.

In one embodiment, the melting temperature of the insulating member 14 is T2, and 120°C ≤ T2 ≤ 600°C, thereby reducing the risk of melting of the insulating member 14 when the busbar 20 and the pole structure 11 are welded and ensuring the safe use performance of the single battery 10.

The melting temperature T2 of the insulating member 14 may be 120°C, 125°C, 130°C, 135°C, 140°C, 145°C, 150°C, 155°C, 160°C, 165°C, 170°C, 175°C, 180°C, 185°C, 190°C, 195°C, 200°C, 210°C, 220°C, 230°C, 240°C, 245°C, 250°C, 255°C, 260°C, 265°C, 270°C, 275°C, 280°C, 285°C, 290°C, 295°C, 300°C, 310°C, 320°C, 330°C, 340°C, 345°C, 350°C, 355°C, 360°C, 365°C, 370°C, 375°C, 380°C, 385°C, 390°C, 395°C, 400°C, 410°C, 420°C, 430°C, 440°C, 445°C, 450°C, 455°C, 460°C, 465°C, 470°C, 475°C, 480°C, 485°C, 490°C, 495°C, 500°C, 510°C, 520°C, 530°C, 540°C, 545°C, 550°C, 555°C, 560°C, 565°C, 570°C, 575°C, 580°C, 585°C, 590°C, 595°C, or 600°C, etc.

The insulating member 14 may be a plastic member, or the insulating member 14 may be a rubber member, or the like. For example, the material of the insulating member 14 may be a liquid crystal polymer (LCP), or the material of the insulating member 14 may be a polyimide (PI), or the material of the insulating member 14 may be a polyethylene (PE), or the insulating member 14 may be acrylonitrile-butadiene-styrene copolymer (ABS), or the material of the insulating member 14 may be polystyrene (PS), or the material of the insulating member 14 may be polyphenyl sulfide (PPS), or the material of the insulating member 14 may be polyvinyl chloride (PVC), or the material of the insulating member 14 may be polypropylene (PP).

The melting temperature T2 of the insulating member 14 can be measured by differential scanning calorimetry (DSC). The melting point T1 of the pole structure 11 can be obtained by a capillary measurement method, a microscope hot plate measurement method, an automatic melting point measurement method (digital melting point measurement instrument), or the like.

In one embodiment, the area of the welding imprint 21 on the surface, away from the pole structure 11, of the busbar 20 is S, and 20 mm²≤S≤250 mm², such that the welding area between the busbar 20 and the pole structure 11 can be ensured, and not only the connection stability between the busbar 20 and the pole structure 11 can be controlled, but also the discharge strength between the busbar 20 and the pole structure 11 can be ensured.

The area S of the welding imprint 21 may be 20 mm², 22 mm², 25 mm², 28 mm², 30 mm², 32 mm², 35 mm², 38 mm², 40 mm², 42 mm², 45 mm², 48 mm², 50 mm², 52 mm², 55 mm², 58 mm², 60 mm², 62 mm², 65 mm², 68 mm², 70 mm², 72 mm², 75 mm², 78 mm², 80 mm², 82 mm², 85 mm², 88 mm², 90 mm², 92 mm², 95 mm², 98 mm², 100 mm², 110 mm², 120 mm², 130 mm², 140 mm², 150 mm², 160 mm², 170 mm², 180 mm², 190 mm², 200 mm², 210 mm², 220 mm², 230 mm², 240 mm², or 250 mm², etc.

In one embodiment, the maximum molten pool depth formed on the pole structure 11 by welding with the busbar 20 is H, and 0.5 mm≤H≤2 mm, which not only ensures the connection strength between the pole structure 11 and the busbar 20, but also avoids the problem that the pole structure 11 is damaged due to excessive molten pool depth, thereby improving the safe use performance of the battery.

The maximum molten pool depth H formed on the pole structure 11 by welding with the busbar 20 may be 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm, etc.

The pole structure 11 is welded with the busbar 20 to form the welding imprint 21, and the molten pool depth H formed on the pole structure 11 by welding with the busbar 20 refers to the maximum molten pool depth formed on the pole structure 11, excluding the molten pool depth value on the busbar 20, as shown in FIG. 2.

In one embodiment, the minimum vertical distance between the insulating member 14 and the welding imprint 21 is L, and 0.4 mm≤L≤3 mm, such that the probability of melting of the insulating member 14 due to welding heat can be effectively reduced, and the safe use performance of the single battery 10 can be improved. The minimum vertical distance L between the insulating member 14 and the welding imprint 21 can be 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm, etc.

In one embodiment, the welding imprint 21 has a circumferentially closed structure, which not only facilitates the welding operation between the pole structure 11 and the busbar 20, improves the welding efficiency between the pole structure 11 and the busbar 20, but also improves the connection strength and discharge capacity between the pole structure 11 and the busbar 20, thereby improving the safe use performance of the battery.

The welding imprint 21 has a circumferentially closed structure, and during the welding process between the pole structure 11 and the busbar 20, it is also possible to ensure heat dissipation, reduce the amount of heat transferred to the insulating member 14, and thus reduce damage to the insulating member 14.

The end surface, connected to the busbar 20, of the pole structure 11 may be basically a circular surface, and the welding imprint 21 may have a circumferentially closed structure. At this time, the circumferentially closed structure may be basically a circular ring, an elliptical ring, or the like; alternatively, the end surface, connected to the busbar 20, of the pole structure 11 may be basically a rectangular surface, and the welding imprint 21 may have a circumferentially closed structure. At this time, the circumferentially closed structure may be basically a circular ring, an elliptical ring, a rectangular ring, or the like; alternatively, the end surface, connected to the busbar 20, of the pole structure 11 may have an irregular surface.

In one embodiment, the welding imprint 21 has a circular ring structure, such that heat can be dissipated from a middle hollow position and an outer contour position, and the risk of melting and failure of the insulating member 14 caused by heat accumulation can be avoided, thereby improving the safe use performance of the battery.

In one embodiment, the battery housing 12 and the fixing portion 13 are of an integrated structure, which not only improves the manufacturing efficiency of the battery, but also ensures the structural strength of the battery housing 12 and the fixing portion 13. The battery housing 12 and the fixing portion 13 may be extruded and formed.

The fixing portion 13 may be bent into the connection section 131 and the pressing section 132. For example, an initial state of the fixing portion 13 may have a cylindrical shape, and the connection section 131 and the pressing section 132 may be formed by bending the cylindrical shape, that is, a certain included angle is formed between the connection section 131 and the pressing section 132, such that the connection section 131 can be provided on the battery housing 12, and the pressing section 132 can be pressed on the pole structure 11, thereby effectively preventing the pole structure 11 from being separated from the battery housing 12, and the safe use performance of the battery can be ensured.

In one embodiment, the battery housing 12 is provided with a fixing portion 13, and the fixing portion 13 may be welded with the battery housing 12, or the fixing portion 13 may be integrally molded to the battery housing 12.

In one embodiment, the area surrounded by the circumferential outer edge of one end, connected to the busbar 20, of the pole structure 11 is S1, and 0.01≤S/S1≤0.5, which not only makes the pole structure 11 have a reliable end surface area, thereby facilitating the connection between the pole structure 11 and the busbar 20, but also controls the welding area between the pole structure 11 and the busbar 20, thereby reducing the damage to the insulating member 14 caused by excessive welding heat and improving the safe use performance of the battery.

If the ratio of the area S of the welding imprint 21 of the surface, away from of the pole structure 11, of the busbar 20 to the area S1 enclosed by the circumferential outer edge of the end, connected to the busbar 20, of the pole structure 11 is too large, the heat generated in the welding process will be relatively large, and the influence on the insulating member 14 will be greater, which will easily cause damage and failure of the insulating member 14, which is not conducive to improving the safety performance of the battery. If the ratio of the area S of the welding imprint 21 of the surface, away from the pole structure 11, of the busbar 20 to the area S1 enclosed by the circumferential outer edge of the end, connected to the busbar 20, of the pole structure 11 is too small, it is not conducive to ensuring the connection strength and discharge capacity between the pole structure 11 and the busbar 20.

The ratio of the area S of the welding imprint 21 of the surface, away from the pole structure 11, of the busbar 20 to the area S1 enclosed by the circumferential outer edge of the end , connected to the busbar 20, of the pole structure 11 may be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, or 0.5, etc.

In one embodiment, as shown in FIGs. 1 and 2, the battery housing 12 includes a cover plate 122 and a housing member 123, the cover plate 122 and the housing member 123 are connected to each other, the cover plate 122 is provided with the pole through hole 121, and the fixing portion 13 is provided on the cover plate 122. The installation of the cover plate 122 can not only facilitate the molding of the fixing portion 13, but also facilitate the installation of the subsequent pole structure 11, thereby improving the manufacturing efficiency of the single battery 10.

As shown in FIG. 1, the battery housing 12 includes a cover plate 122 and a housing member 123, the cover plate 122 and the housing member 123 may be welded and connected to each other, and the cover plate 122 and the fixing portion 13 may be integrally molded. For example, the cover plate 122 and the fixing portion 13 may be formed by imprinting, rolling, or the like.

It should be noted that, in some embodiments, the battery housing 12 includes a cover plate 122 and a housing member 123, and the fixing portion 13 may be provided on the housing member 123, and the pole through hole 121 may be provided on the housing member 123.

The housing member 123 may include a bottom wall portion opposite the cover plate 122 and a side wall portion connected to the cover plate 122, and the housing member 123 may have an integrated structure.

In one embodiment, the pole structure 11 has an integrated structure, the single battery 10 further includes a cell 15, the cell 15 is provided in the battery housing 12, and two opposite ends of the pole structure 11 are respectively connected to the busbar 20 and the cell 15, which not only has a simple structure, but also ensures that the pole structure 11 can have reliable discharge capability, thereby improving the safe use performance of the battery.

As shown in FIG. 2, the pole structure 11 has an integrated structure, and the pole structure 11 may be an aluminum block, or the pole structure 11 may be a copper block, or the pole structure 11 may be a steel block, or the pole structure 11 may be an iron block, or the like.

The pole structure 11 may have a top end facing the busbar 20, the pole structure 11 may have a bottom end facing the cell 15, the top end of the pole structure 11 may be welded with the busbar 20, the bottom end of the pole structure 11 may be electrically connected to a tab of the cell 15 through an adapter strip, or the bottom end of the pole structure 11 may be directly connected to the tab of the cell 15.

Note that the single battery 10 includes a cell and an electrolyte, and a minimum unit capable of performing an electrochemical reaction such as charge/discharge. A cell refers to a unit formed by winding or laminating a stack comprising a first pole piece, a partition material, and a second pole piece. When the first pole piece is a positive plate, the second pole piece is a negative plate. The polarities of the first pole piece and the second pole piece may be interchanged. The first pole piece and the second pole piece are coated with an active material.

In one embodiment, the single battery 10 may be a quadrangular prism battery, and the quadrangular prism battery mainly refers to a contour of a prism shape, but it is not strictly limited whether each side of the prism is necessarily a straight line in a strict sense, and the corner between the edges is not necessarily a right angle, but may be an arc transition.

The battery can be a laminated battery, which is not only convenient to assemble, but also can be processed to obtain a battery with a longer length. Specifically, the cell is a laminated cell, and the cell has first pole pieces stacked on each other, second pole pieces electrically opposite to the first pole piece, and separator pieces provided between the first pole pieces and the second pole piece, such that a plurality of pairs of the first pole pieces and the second pole pieces are stacked to form the laminated cell.

Alternatively, the battery may be a wound type battery, that is, a first pole piece, a second pole piece electrically opposite to the first pole piece, and a separator piece provided between the first pole piece and the second pole piece are wound to obtain a wound cell.

In one embodiment, the single battery 10 may be a cylindrical battery, or alternatively, the single battery 10 may be a hexagonal prism battery. The battery may be a wound type battery, that is, a first pole piece, a second pole piece electrically opposite to the first pole piece, and a separator piece provided between the first pole piece and the second pole piece are wound to obtain a wound type battery cell.

In one embodiment, the battery pack is a battery module or a battery pack.

The battery module includes a plurality of single batteries 10, and the battery module may further include an end plate and a side plate, and the end plate and the side plate are used for fixing the plurality of single batteries 10.

The plurality of single batteries 10 may be formed into a battery module and installed in a battery case, and the plurality of single batteries 10 may be fixed by the end plate and the side plate. The plurality of single batteries 10 may be directly provided in the battery case, that is, there is no need to group the plurality of batteries, and at this time, the end plate and the side plate may be removed.

Regarding the battery pack described above, the temperature test (t) may be performed on the insulating member 14 of the single battery 10, and the tensile strength (K) between the pole structure 11 and the busbar 20 may be performed.

The temperature test of the insulating member 14 may include a thermocouple provided at the edge of the insulating member 14. For example, a plurality of thermocouples may be provided, and the plurality of thermocouples may be provided at a top end of the insulating member 14. Then, the busbar 20 is welded with an end face of the pole structure 11, and the thermometers are turned on at the same time, and the temperature change is observed and recorded.

The busbar 20 is welded with the end face of the pole structure 11, and then the whole of the busbar 20 is placed on a tension machine, the cover plate 122 can be fixed, the busbar 20 can be clamped, and the tension force can be applied to the busbar 20 until the busbar 20 is separated from the pole structure 11, and the tension force value is recorded and then converted into a stress value.

| Serial No. | S | H | L(mm) | SH/L | T1 | T2 | (SHT1)/(LT2) | t °C | K |
|---|---|---|---|---|---|---|---|---|---|
| Embodiment 1 | 250 | 2 | 0.5 | 1000.0 | 1200 | 120 | 10000.0 | 118 | 1200N |
| Embodiment 2 | 198 | 1.8 | 0.75 | 501.6 | 1083 | 400 | 1358.1 | 102 | 1100N |
| Embodiment 3 | 20 | 0.5 | 3 | 3.3 | 600 | 600 | 3.3 | 80 | 800N |
| Embodiment 4 | 115 | 1.8 | 0.75 | 276.0 | 1083 | 130 | 2299.3 | 98 | 1002N |
| Embodiment 5 | 198 | 1.25 | 0.75 | 330.0 | 1083 | 130 | 2749.2 | 108 | 1004N |
| Embodiment 6 | 198 | 1.8 | 1.75 | 203.7 | 1083 | 130 | 1696.6 | 123 | 1100N |
| Embodiment 7 | 251 | 1.8 | 1.75 | 258.2 | 1083 | 130 | 2150.8 | 128 | 1150N |
| Embodiment 8 | 15 | 1.8 | 1.75 | 15.4 | 1083 | 130 | 128.5 | 79 | 810N |
| Embodiment 9 | 198 | 2.3 | 1.75 | 260.2 | 1083 | 130 | 2167.9 | 118 | 1160N |
| Embodiment 10 | 198 | 0.4 | 1.75 | 45.3 | 1083 | 130 | 377.0 | 107 | 970N |
| Embodiment 11 | 198 | 1.8 | 3.5 | 101.8 | 1083 | 130 | 848.3 | 88 | 943N |
| Embodiment 12 | 198 | 1.2 | 0.3 | 792.0 | 1083 | 130 | 7422.7 | 118 | 837N |
| Embodiment 13 | 250 | 2 | 0.55 | 909.1 | 1100 | 200 | 5000.0 | 110 | 1160N |
| Embodiment 14 | 250 | 2 | 0.55 | 909.1 | 1200 | 100 | 10909.1 | 108 | 1162N |
| Embodiment 15 | 20 | 0.5 | 3 | 3.3 | 230 | 600 | 1.3 | 55 | 810N |
| Embodiment 16 | 198 | 1.8 | 1.75 | 203.7 | 1300 | 130 | 2036.6 | 70 | 1102N |
| Embodiment 17 | 198 | 1.8 | 1.75 | 203.7 | 550 | 130 | 861.6 | 70 | 1101N |
| Embodiment 18 | 198 | 1.8 | 1.75 | 203.7 | 1083 | 610 | 361.6 | 70 | 1098N |
| Embodiment 19 | 198 | 1.8 | 1.75 | 203.7 | 900 | 100 | 1832.9 | 72 | 1102N |
| Comparative Example 1 | 250 | 2 | 0.4 | 1250 | 700 | 130 | 6730.7 | 140 | 802N |
| Comparative Example 2 | 20 | 2 | 20 | 2.0 | 700 | 130 | 10.8 | 137 | 809N |
| Comparative Example 3 | 4 | 3 | 5 | 2.4 | 700 | 130 | 12.9 | 140 | 745N |
| Comparative Example 4 | 4 | 3 | 5 | 2.4 | 550 | 610 | 2.2 | 140 | 710N |

For the above-described embodiments, in each embodiment and comparative example, an annular spot laser welder may be used to weld the busbar 20 and the pole structure 11, a maximum power of an inner ring is 2000 W, and that of an outer ring is 4000 W. Before welding, the sample is wiped with alcohol or laser cleaned to remove surface impurities, and then welded.

Embodiment 1: the material of the pole structure 11 is iron; the material of the insulating member 14 is polystyrene (PS); and welding was performed at a power of 1050 W for the inner ring, 2700 W for the outer ring, and a speed of 80 m/s.

Embodiment 2: the material of the pole structure 11 is copper; the material of the insulating member 14 is liquid crystal polymer (LCP); and welding was performed at a power of 950 W for the inner ring, 2550 W for the outer ring, and a speed of 80 m/s.

Embodiment 3: the material of the pole structure 11 is aluminum; the material of the insulating member 14 is polyimide (PI); and welding was performed at a power of 800 W for the inner ring, 2400 W for the outer ring, and a speed of 80 m/s.

Embodiment 4: the material of the pole structure 11 is copper; the material of the insulating member 14 is polyethylene (PE); and welding was performed at a power of 950 W for the inner ring, 2550 W for the outer ring, and a speed of 80 m/s.

Embodiment 5: the material of the pole structure 11 is copper; the material of the insulating member 14 is polyethylene (PE); and welding was performed at a power of 900 W for the inner ring, 2500 W for the outer ring, and a speed of 80 m/s.

Embodiment 6: the material of the pole structure 11 is copper; the material of the insulating member 14 is polyethylene (PE); and welding was performed at a power of 950 W for the inner ring, 2550 W for the outer ring, and a speed of 80 m/s.

Embodiment 7: the material of the pole structure 11 is copper; the material of the insulating member 14 is polyethylene (PE); and welding was performed at a power of 950 W for the inner ring, 2550 W for the outer ring, and a speed of 80 m/s.

Embodiment 8: the material of the pole structure 11 is copper; the material of the insulating member 14 is polyethylene (PE); and welding was performed at a power of 950 W for the inner ring, 2550 W for the outer ring, and a speed of 80 m/s.

Embodiment 9: the material of the pole structure 11 is copper; the material of the insulating member 14 is polyethylene (PE); and welding was performed at a power of 1250 W for the inner ring, 2850 W for the outer ring, and a speed of 80 m/s.

Embodiment 10: the material of the pole structure 11 is copper; the material of the insulating member 14 is polyethylene (PE); and welding was performed at a power of 750 W for the inner ring, 2350 W for the outer ring, and a speed of 80 m/s.

Embodiment 11: the material of the pole structure 11 is copper; the material of the insulating member 14 is polyethylene (PE); and welding was performed at a power of 950 W for the inner ring, 2550 W for the outer ring, and a speed of 80 m/s.

Embodiment 12: the material of the pole structure 11 is copper; the material of the insulating member 14 is polyethylene (PE); and welding was performed at a power of 1050 W for the inner ring, 2650 W for the outer ring, and a speed of 80 m/s.

Embodiment 13: the material of the pole structure 11 is copper-aluminum composite; the material of the insulating member 14 is acrylonitrile-butadiene-styrene copolymer (ABS); and welding was performed at a power of 1050 W for the inner ring, 2650 W for the outer ring, and a speed of 80 m/s.

Embodiment 14: the material of the pole structure 11 is copper-aluminum composite; the material of the insulating member 14 is polyolefin elastomer (POE); and welding was performed at a power of 1050 W for the inner ring, 2650 W for the outer ring, and a speed of 80 m/s.

Embodiment 15: the material of the pole structure 11 is tin; the material of the insulating member 14 is polyimide (PI); and welding was performed at a power of 800 W for the inner ring, 2400 W for the outer ring, and a speed of 80 m/s.
Embodiment 16: the material of the pole structure 11 is steel; the material of the insulating member 14 is polyethylene (PE); and welding was performed at a power of 950 W for the inner ring, 2550 W for the outer ring, and a speed of 80 m/s.

Embodiment 17: the material of the pole structure 11 is aluminum alloy (aluminum calcium, aluminum copper, aluminum gold); the material of the insulating member 14 is liquid crystal polymer (LCP); and welding was performed at a power of 950 W for the inner ring, 2550 W for the outer ring, and a speed of 80 m/s.

Embodiment 18: the material of the pole structure 11 is copper; the material of the insulating member 14 is polyimide (PI); and welding was performed at a power of 950 W for the inner ring, 2550 W for the outer ring, and a speed of 80 m/s.

Embodiment 19: the material of the pole structure 11 is copper-aluminum composite; the material of the insulating member 14 is polyethylene (PE); and welding was performed at a power of 1050 W for the inner ring, 2650 W for the outer ring, and a speed of 80 m/s.

Comparative Example 1: the material of the pole structure 11 is copper-aluminum composite; the material of the insulating member 14 is polyethylene (PE); and welding was performed at a power of 1050 W for the inner ring, 2650 W for the outer ring, and a speed of 80 m/s.

Comparative Example 2: the material of the pole structure 11 is copper-aluminum composite; the material of the insulating member 14 is polyethylene (PE); and welding was performed at a power of 1050 W for the inner ring, 2650 W for the outer ring, and a speed of 80 m/s.

Comparative Example 3: the material of the pole structure 11 is copper-aluminum composite; the material of the insulating member 14 is polyethylene (PE); and welding was performed at a power of 1300 W for the inner ring, 2900 W for the outer ring, and a speed of 80 m/s.

Comparative Example 4: the material of the pole structure 11 is aluminum alloy (aluminum calcium, aluminum copper, aluminum gold); the material of the insulating member 14 is polyimide (PI); and welding was performed at a power of 1300 W for the inner ring, 2900 W for the outer ring, and a speed of 80 m/s.

Other implementations of the present disclosure will be apparent to a person skilled in the art from consideration of the invention creation in the description and practice herein. The present disclosure is intended to cover any variations, uses, or adaptations of the present disclosure following, in general, the principles of the disclosure and including such departures from the present disclosure as come within common knowledge or customary practice in the art to which the disclosure pertains. It is intended that the specification and exemplary implementations be considered as exemplary only, with a true scope and spirit of the disclosure being indicated by the following claims.

## Claims

1. A battery pack, **characterized by** comprising a single battery (10) and a busbar (20), the single battery (10) comprising:
a pole structure (11), wherein the pole structure (11) is welded with the busbar (20), a welding imprint (21) is formed on a surface, away from the pole structure (11), of the busbar (20), an area of the welding imprint (21) is S, and a maximum molten pool depth formed on the pole structure (11) by welding with the busbar (20) is H;
a battery housing (12), wherein a pole through hole (121) is provided on the battery housing (12), at least a part of the pole structure (11) is provided in the pole through hole (121), the battery housing (12) is provided with a fixing portion (13) bent into a connection section (131) and a pressing section (132), the connection section (131) is provided on the battery housing (12), and the pressing section (132) is pressed on the pole structure (11) such that the pole structure (11) is sandwiched between the pressing section (132) and the battery housing (12); and
an insulating member (14), wherein at least a part of the insulating member (14) is provided between the fixing portion (13) and **characterized in that** the pole structure (11), and a minimum vertical distance between the insulating member (14) and the welding imprint (21) in a direction perpendicular to a direction where the pole through hole (121) penetrates is L, and 3 mm²≤S×H/L≤1000 mm².

2. The battery pack according to claim 1, **characterized in that** a melting point of the pole structure (11) is T1, a melting temperature of the insulating member (14) is T2, and 3 mm²≤(S×H×T1)/(L×T2)≤10000 mm².

3. The battery pack according to claim 2, **characterized in that** 600°C≤T1≤1200°C, and/or 120°C≤T2≤600°C.

4. The battery pack according to claim 1, **characterized in that** 20 mm²≤S≤250 mm², and/or 0.5 mm≤H≤2 mm, and/or 0.4 mm≤L≤3 mm.

5. The battery pack according to any one of claims 1 to 4, **characterized in that** the welding imprint (21) has a circumferentially closed structure.

6. The battery pack according to claim 5, **characterized in that** the welding imprint (21) has a circular ring structure.

7. The battery pack according to any one of claims 1 to 4, **characterized in that** the battery housing (12) and the fixing portion (13) are of an integrated structure.

8. The battery pack according to any one of claims 1 to 4, **characterized in that** a circumferential outer edge of one end, connected to the busbar (20), of the pole structure (11) encloses an area of S1, and 0.01≤S/S1≤0.5.

9. The battery pack according to any one of claims 1 to 4, **characterized in that** the battery housing (12) comprises a cover plate (122) and a housing member (123), the cover plate (122) and the housing member (123) are connected to each other, the pole through hole (121) is provided on the cover plate (122), and the fixing portion (13) is provided on the cover plate (122).

10. The battery pack according to any one of claims 1 to 4, **characterized in that** the pole structure (11) has an integrated structure, the single battery (10) further comprises a cell (15), the cell (15) is provided in the battery housing (12), and two opposite ends of the pole structure (11) are respectively connected to the busbar (20) and the cell (15).

11. The battery pack according to any one of claims 1 to 4, **characterized in that** the single battery (10) is a quadrangular prism battery.

## Patentansprüche

1. Batteriepack, **dadurch gekennzeichnet, dass** es eine einzelne Batterie (10) und eine Sammelschiene (20) umfasst, wobei die einzelne Batterie (10) umfasst:
eine Polstruktur (11), wobei die Polstruktur (11) mit der Sammelschiene (20) verschweißt ist, wobei ein Schweißabdruck (21) an einer von der Polstruktur (11) abgewandten Oberfläche der Sammelschiene (20) gebildet ist, wobei eine Fläche des Schweißabdrucks (21) S ist, und eine maximale Schmelzbadtiefe, die an der Polstruktur (11) durch das Verschweißen mit der Sammelschiene (20) gebildet ist, H ist;
ein Batteriegehäuse (12), wobei an dem Batteriegehäuse (12) eine Pol-Durchgangsöffnung (121) vorgesehen ist, mindestens ein Teil der Polstruktur (11) in der Pol-Durchgangsöffnung (121) vorgesehen ist, das Batteriegehäuse (12) mit einem Befestigungsabschnitt (13) vorgesehen ist, der zu einem Verbindungsabschnitt (131) und einem Druckabschnitt (132) gebogen ist, der Verbindungsabschnitt (131) an dem Batteriegehäuse (12) vorgesehen ist und der Druckabschnitt (132) so auf die Polstruktur (11) gedrückt wird, dass die Polstruktur (11) sandwichartig zwischen dem Druckabschnitt (132) und dem Batteriegehäuse (12) eingeschlossen ist; und
ein Isolierelement (14), wobei zumindest ein Teil des Isolierelements (14) zwischen dem Befestigungsabschnitt (13) und **dadurch gekennzeichnet, dass** die Polstruktur (11) vorgesehen ist, und ein minimaler vertikaler Abstand zwischen dem Isolierelement (14) und dem Schweißabdruck (21) in einer Richtung, die senkrecht zu einer Richtung ist, in der die Pol-Durchgangsöffnung (121) verläuft, L ist, und 3 mm² ≤ S × H / L ≤ 1000 mm² gilt.

2. Batteriepack nach Anspruch 1, **dadurch gekennzeichnet, dass** ein Schmelzpunkt der Polstruktur (11) T1 beträgt, eine Schmelztemperatur des Isolierelements (14) T2 beträgt und 3 mm² ≤ (S × H × T1) / (L × T2) ≤ 10000 mm² gilt.

3. Batteriepack nach Anspruch 2, **dadurch gekennzeichnet, dass** 600 °C ≤ T1 ≤ 1200 °C und / oder 120 °C ≤ T2 ≤ 600 °C gilt.

4. Batteriepack nach Anspruch 1, **dadurch gekennzeichnet, dass** 20 mm² ≤ S ≤ 250 mm² und / oder 0,5 mm ≤ H ≤ 2 mm und / oder 0,4 mm ≤ L ≤ 3 mm gilt.

5. Batteriepack nach einem der Ansprüche 1 bis 4, **dadurch gekennzeichnet, dass** der Schweißabdruck (21) eine in Umfangsrichtung geschlossene Struktur aufweist.

6. Batteriepack nach Anspruch 5, **dadurch gekennzeichnet, dass** der Schweißabdruck (21) eine kreisförmige Ringstruktur aufweist.

7. Batteriepack nach einem der Ansprüche 1 bis 4, **dadurch gekennzeichnet, dass** das Batteriegehäuse (12) und der Befestigungsabschnitt (13) eine integrierte Struktur aufweisen.

8. Batteriepack nach einem der Ansprüche 1 bis 4, **dadurch gekennzeichnet, dass** eine umlaufende Außenkante eines mit der Sammelschiene (20) verbundenen Endes der Polstruktur (11) eine Fläche von S1 umschließt und 0,01 ≤ S / S1 ≤ 0,5 gilt.

9. Batteriepack nach einem der Ansprüche 1 bis 4, **dadurch gekennzeichnet, dass** das Batteriegehäuse (12) eine Abdeckplatte (122) und ein Gehäuseteil (123) umfasst, die Abdeckplatte (122) und das Gehäuseteil (123) miteinander verbunden sind, die Pol-Durchgangsöffnung (121) an der Abdeckplatte (122) vorgesehen ist und der Befestigungsabschnitt (13) an der Abdeckplatte (122) vorgesehen ist.

10. Batteriepack nach einem der Ansprüche 1 bis 4, **dadurch gekennzeichnet, dass** die Polstruktur (11) eine integrierte Struktur aufweist, wobei die einzelne Batterie (10) ferner eine Zelle (15) umfasst, wobei die Zelle (15) in dem Batteriegehäuse (12) vorgesehen ist und zwei gegenüberliegende Enden der Polstruktur (11) jeweils mit der Sammelschiene (20) und der Zelle (15) verbunden sind.

11. Batteriepack nach einem der Ansprüche 1 bis 4, **dadurch gekennzeichnet, dass** die einzelne Batterie (10) eine viereckige Prismenbatterie ist.

## Revendications

1. Bloc-batterie, **caractérisé en ce qu'**il comprend une seule batterie (10) et une barre omnibus (20), la batterie individuelle (10) comprenant :
une structure de borne (11), dans laquelle la structure de borne (11) est soudée à la barre omnibus (20), une empreinte de soudure (21) est formée sur une surface de la barre omnibus (20) opposée à la structure de borne (11), la surface de l'empreinte de soudure (21) est S, et la profondeur maximale du bain de fusion formé sur la structure de borne (11) par soudage avec la barre omnibus (20) est H ;
un boîtier de batterie (12), dans lequel un trou traversant pour borne (121) est prévu sur le boîtier de batterie (12), au moins une partie de la structure de borne (11) est logée dans le trou traversant pour borne (121), le boîtier de batterie (12) est muni d'une partie de fixation (13) pliée pour former une section de connexion (131) et une section de pression (132), la section de connexion (131) est disposée sur le boîtier de batterie (12), et la section de pression (132) est pressée contre la structure de borne (11) de telle sorte que la structure de borne (11) soit prise en sandwich entre la section de pression (132) et le boîtier de batterie (12) ; et
un élément isolant (14), dans lequel au moins une partie de l'élément isolant (14) est disposée entre la partie de fixation (13) et **caractérisé en ce que** la structure de borne (11), et la distance verticale minimale entre l'élément isolant (14) et l'empreinte de soudure (21) dans une direction perpendiculaire à la direction dans laquelle le trou traversant pour borne (121) pénètre est L, et 3 mm² × (S × H)/L ≤ 1 000 mm².

2. Bloc-batterie selon la revendication 1, **caractérisé en ce que** le point de fusion de la structure de borne (11) est T1, la température de fusion de l'élément isolant (14) est T2, et 3 mm² × (S × H × T1)/(L × T2) ≤ 10 000 mm².

3. Bloc-batterie selon la revendication 2, **caractérisé en ce que** 600 °C ≤ T1 ≤ 1 200 °C, et/ou 120 °C ≤ T2 ≤ 600 °C.

4. Bloc-batterie selon la revendication 1, **caractérisé en ce que** 20 mm² ≤ S ≤ 250 mm², et/ou 0,5 mm ≤ H ≤ 2 mm, et/ou 0,4 mm ≤ L ≤ 3 mm.

5. Bloc-batterie selon l'une quelconque des revendications 1 à 4, **caractérisé en ce que** l'empreinte de soudure (21) présente une structure fermée circonférentiellement.

6. Bloc-batterie selon la revendication 5, **caractérisé en ce que** l'empreinte de soudure (21) présente une structure annulaire circulaire.

7. Bloc-batterie selon l'une quelconque des revendications 1 à 4, **caractérisé en ce que** le boîtier de batterie (12) et la partie de fixation (13) forment une structure monobloc.

8. Bloc-batterie selon l'une quelconque des revendications 1 à 4, **caractérisé en ce qu'**un bord extérieur circonférentiel d'une extrémité, reliée à la barre omnibus (20), de la structure de borne (11) englobe une surface de S1, et 0,01≤S/S1≤0,5.

9. Bloc-batterie selon l'une quelconque des revendications 1 à 4, **caractérisé en ce que** le boîtier de batterie (12) comprend une plaque de couvercle (122) et un élément de boîtier (123), la plaque de couvercle (122) et l'élément de boîtier (123) étant reliés l'un à l'autre, le trou traversant de borne (121) étant prévu sur la plaque de couvercle (122), et la partie de fixation (13) étant prévue sur la plaque de couvercle (122).

10. Bloc-batterie selon l'une quelconque des revendications 1 à 4, **caractérisé en ce que** la structure de borne (11) présente une structure monobloc, la batterie individuelle (10) comprend en outre une cellule (15), la cellule (15) est disposée dans le boîtier de batterie (12), et les deux extrémités opposées de la structure de borne (11) sont respectivement reliées à la barre omnibus (20) et à la cellule (15).

11. Bloc-batterie selon l'une quelconque des revendications 1 à 4, **caractérisé en ce que** la batterie individuelle (10) est une batterie en forme de prisme quadrangulaire.
